(19) **Europäisches Patentamt European Patent Office Office européen des brevets**

(11) **EP 1 345 042 B1**

(12) **FASCICULE DE BREVET EUROPEEN**

(45) Date de publication et mention de la délivrance du brevet:
**15.12.2010 Bulletin 2010/50**

(51) Int Cl.:
***G01S 5/14*** *(2006.01)*

(21) Numéro de dépôt: **03100399.9**

(22) Date de dépôt: **20.02.2003**

(54) **Système de localisation 3D à grande précision**

3D-Ortungssystem mit hoher Genauigkeit

3D locating system with a high accuracy

(84) Etats contractants désignés:
**AT BE BG CH CY CZ DE DK EE ES FI FR GB GR HU IE IT LI LU MC NL PT SE SI SK TR**

(30) Priorité: **22.02.2002 FR 0202302**

(43) Date de publication de la demande:
**17.09.2003 Bulletin 2003/38**

(73) Titulaire: **Thales**
**75008 Paris (FR)**

(72) Inventeurs:
• **Hethuin, Serge**
**94117 CX Arcueil (FR)**
• **Eumurian, Grégoire**
**94117 CX Arcueil (FR)**
• **Giraudo, Michel**
**94117 CX Arcueil (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 444 738      FR-A- 2 772 928**
**US-A- 5 786 773**

**Description**

La présente invention concerne un système et un procédé de localisation en 3 dimensions, 3D, de précision élevée, d'éléments ou d'individus. La précision est par exemple de l'ordre du mètre.

Les individus peuvent se situer en milieu ouvert (Outdoor) ou encore en milieu urbain (Indoor). Le système est qualifié de 3D au regard de son pouvoir de discrimination d'un individu entre plusieurs étages par exemple, introduisant ainsi une précision selon l'axe z, en considérant un repère classique, x, y, z.

Elle s'applique par exemple pour positionner des membres d'une équipe d'intervention (pompiers, médecins, forces spéciales, équipes de maintenance dans des zones à risques,...). Elle concerne également un plus large public comme le personnel soignant dans les hôpitaux, les personnes âgées dans les maisons de retraite, les personnes victimes d'avalanches, etc.

Les techniques de localisation actuellement utilisées font largement appel à différentes techniques dont quatre sont rappelées ci-après.

1. Systèmes de localisation par satellites du type GPS (abréviation du vocable anglo-saxon « Global Positionnig System »)

Dans un système de localisation par satellites de type GPS, la position géographique d'un récepteur GPS est déterminée par une triangulation des pseudo-distances qui séparent le récepteur d'une grappe de satellites. Ceci n'est possible que si l'élément ou l'individu à localiser se trouve en visibilité des satellites, ce qui n'est pas le cas dans un certain nombre de situations (masquage par couvert forestier, tunnels, intervention dans les immeubles, parkings souterrains, etc.). D'autre part, la précision d'un GPS classique, (traitement de la fréquence L1, code C/A) est de l'ordre de 25 à 30 m et ne permet donc pas d'obtenir une précision de l'ordre du mètre. De plus, les GPS assistés par podomètre ou par centrale à l'inertie, par exemple, restent de précision limitée.

2. Systèmes de radiotéléphone cellulaires, comme le système GSM (abréviation du vocable anglo-saxon « Global System for Mobile

Communication ») qui permettent à des mobiles de communiquer par voie radio avec d'autres mobiles ou avec le réseau téléphonique public commuté, par l'intermédiaire de stations de base situées au centre de chaque cellule du réseau cellulaire

Dans un système de communication de type GSM, la localisation des mobiles est obtenue par une triangulation de pseudo-distances mesurées entre le mobile à identifier et les stations de base. L'initiative de la mesure des pseudo-distances revient, soit aux stations de base voisines de la cellule dans laquelle circule le mobile, soit au mobile. La précision de localisation obtenue par ce procédé est en relation avec la densité de stations de bases : de l'ordre de 200 m en ville et 400 m en zones rurales.

3. Systèmes de transmission radioélectrique basés sur la radio goniométrie

Dans ces systèmes, la localisation des mobiles est obtenue :

- soit au moyen d'un dispositif autonome de recherche et de localisation. Le procédé fait alors appel à une mesure de distance par un principe du type transpondeur (le module de recherche lance un signal d'interrogation vers l'élément à localiser, ce dernier renvoie instantanément le signal de réponse) et à une mesure de direction sur ce signal de réponse. Dans ce cas, le procédé est généralement du type « Homing » c'est-à-dire que l'individu, en charge de la recherche, approche progressivement le mobile tout au long du déplacement, Cette technique est très aléatoire car il suffit d'un osbtacle pour atténuer fortement le signal et compromettre le processus d'affinage. De plus, la mesure de direction est souvent réalisée à l'aide d'une antenne directive, à cause du manque de précision et de l'encombrement obtenus avec des dispositifs basés sur la mesure différentielle de phase entre plusieurs antennes. Cette recherche par antenne directive est également problématique car peu précise au regard de la taille de l'antenne à mettre en oeuvre.
- soit par une triangulation de pseudo-distances mesurées entre le mobile à identifier et des stations de référence dont la position est parfaitement connue. Celles-ci sont aussi parfaitement synchronisées, généralement par câble, ce qui en limite l'utilisation aux seules zones équipées. De plus, la précision dans ces systèmes est toujours grandement affectée, d'une part par les émissions simultanées des éléments autres que celui à localiser (problème de collisions) et d'autre part par les nombreux multi-trajets rencontrés notamment dans les locaux.

## 4. Dispositifs du type balise/badge

Dans les systèmes basés sur un dispositif de type balise/badge, la zone est équipée de balises (chaque balise délimitant une portion de la zone à la manière des stations de base dans les réseaux cellulaires mais avec une portée de quelques mètres à quelques dizaines de mètres) et les mobiles sont équipés d'un badge transpondeur (passif ou actif). Les balises sont interconnectées par un réseau local et lorsqu'un mobile passe devant l'une d'elles, un message est alors envoyé au centre de surveillance général pour mettre à jour la tenue de position. Ces systèmes ne sont pas compatibles avec une utilisation en extérieur et ils nécessitent une installation préliminaire à toute utilisation dans des locaux. D'autre part, la précision de ces dispositifs n'est pas supérieure à celle de la portée de chacune de ces balises, c'est-à-dire de l'ordre de quelques dizaines de mètres.

Le brevet EP 0 444 738 concerne un système de localisation de véhicule qui met en oeuvre un service de positionnement utilisant le satellite ou GPS de type NAVSTAR et qui est notamment utilisé pour des localisations automatique de véhicules de location, chaque véhicule étant en contact avec une station de base.

L'invention a notamment pour objet un système pour la localisation précise en 3D, de l'ordre du mètre par exemple, à l'extérieur ou à l'intérieur des immeubles, quelque soit l'étage, sans discontinuité de fonctionnement.

L'idée mise en oeuvre dans le procédé et dans le système est notamment d'utiliser une cartographie des lieux associée à des mesures de distance et d'angle afin par exemple de reconstruire les trajets directs et/ou les multi-trajets dus aux différents obstacles.

Les balises sont conçues pour être facilement installées, de faible dimension et de faible coût, offrant ainsi la possibilité d'être soit montées sur des véhicules d'accompagnement, soit déplacées selon la progression du besoin de positionnement ou de la recherche, ou encore, récupérées en fin de service ou éventuellement abandonnées.

L'invention utilise notamment la combinaison de balises positionnées et synchronisées de manière précise de préférence à l'aide du GPS différentiel, les balises recevant les signaux de l'objet ou de la personne à localiser. Cette dernière peut être située à l'extérieur ou à l'intérieur d'immeubles. Les balises externes reçoivent les signaux d'au moins quatre satellites par exemple.

L'invention concerne un système de localisation précise en 3D d'un élément (objet ou individu) comportant au moins les éléments suivants : un ensemble de balises $B_1$, $B_2$, $B_3$, $B_4$ en relation avec une station de référence $B_{réf}$ de coordonnées connues, lesdites balises $B_1$, $B_2$, $B_3$, $B_4$ travaillant sur la base de la localisation satellite différentielle (DGPS), les balises étant reliées entre elles et synchronisées en temps, lesdites balises recevant les signaux dudit élément à localiser, des moyens radio à étalement de spectre entre les membres du réseau à localiser et lesdites balises, une station de calcul $B_{cal}$ caractérisé en ce que la station de calcul $B_{cal}$ est pourvue d'un processeur adapté à exécuter les étapes suivantes :

➢ la transmission par une balise de sa position DGPS, et une liste de multi-trajets avec le temps et la direction d'arrivée de chacun des trajets directs et/ou des multi-trajets émis par l'élément à localiser,
➢ le recalage temporel si nécessaire dans le cas de décalage constaté d'une ou de plusieurs balises,
➢ le calcul des positions estimées de l'élément pour le contexte d'informations reçu de chaque balise,
➢ un traitement des données utilisant une cartographie ou une topologie de l'environnement dans lequel se trouve l'élément à localiser pour reconstruire les différents trajets directs et/ou les multi-trajets, sélectionner les multi-trajets pour déterminer de manière précise en 3D l'élément à localiser.

Le nombre des balises est par exemple au moins égal à 4, trois d'entre elles étant disposées dans un même plan et la quatrième à une altitude donnée de ce plan.

L'invention vise aussi un procédé de localisation en 3 dimensions d'un élément dans un système comportant au moins 4 balises $B_1$, $B_2$, $B_3$, $B_4$ travaillant sur la base de la localisation satellite différentielle (DGPS), les balises étant synchronisées en temps, caractérisé en ce qu'il comporte au moins les étapes suivantes :

➢ la transmission par une balise de sa position DGPS, et d'une liste de multi-trajets avec le temps et la direction d'arrivée de chacun des trajets directs et/ou des multi-trajets émis par l'élément à localiser,
➢ le recalage temporel si nécessaire dans le cas de décalage constaté d'une ou de plusieurs balises,
➢ le calcul des positions estimées de l'élément pour le contexte d'informations reçu de chaque balise,
➢ un traitement des données utilisant une cartographie ou une topologie de l'environnement dans lequel se trouve l'élément à localiser pour reconstruire les différents trajets directs et/ou les multi-trajets, sélectionner les multi-trajets pour déterminer de manière précise en 3D l'élément à localiser.

Le traitement des données comporte une étape de comparaison des données recalées et une étape d'élimination des informations de la ou des balises s'écartant de trop de la valeur indiquée par le plus grand nombre.

L'objet de l'invention présente notamment les avantages suivants :

- Elle offre :

  ➢ une solution de localisation des individus en milieu « difficile », c'est-à-dire urbain, tel que les immeubles, les sous-sols, etc., là où les signaux GPS ne passent pas habituellement,
  ➢ une architecture simple et peu coûteuse car elle ne nécessite pas de moyens de déploiement importants. Les balises utilisées sont en effet de faible taille, donc déplaçables, largables, projetables, facilement mises en place et de coût modéré,

- Le procédé est compatible avec toutes les formes d'onde normalisées, ce qui permet par exemple d'utiliser la forme d'onde la mieux adaptée à l'application envisagée. Par exemple, un signal modulé par code PN, la technologie à large étalement spectral du type UWB, etc.,
- La possibilité de localiser un groupe de personnes ou d'objets, membres d'un même réseau radio,
- La localisation des membres d'une même équipe d'intervention, mais aussi faciliter l'arrivée de secours ou de renfort aux endroits précis où se trouvent des personnes en difficultés ou en surcharge.

D'autres caractéristiques et avantages de l'objet de la présente invention apparaîtront mieux à la lecture de la description qui suit donnée à titre illustratif et nullement limitatif à la lecture des figures annexées qui représentent :

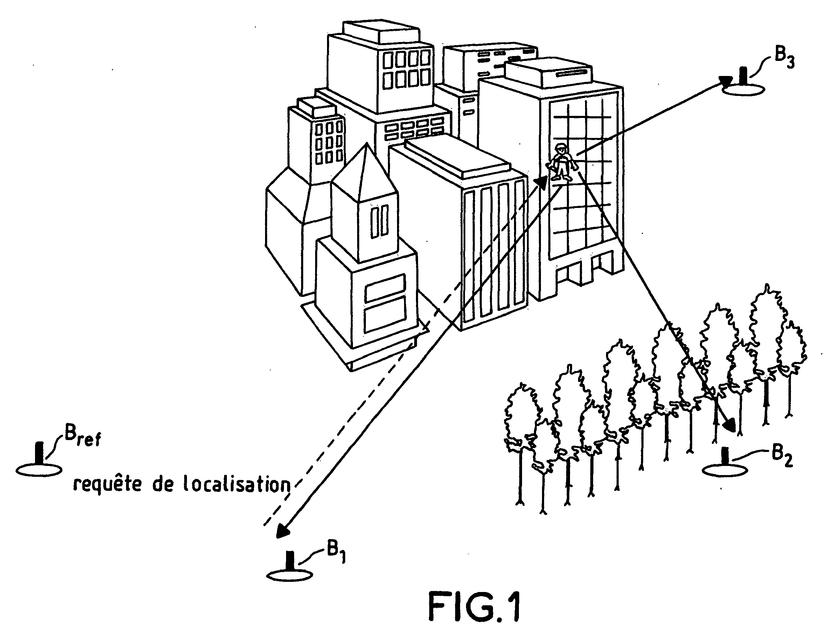

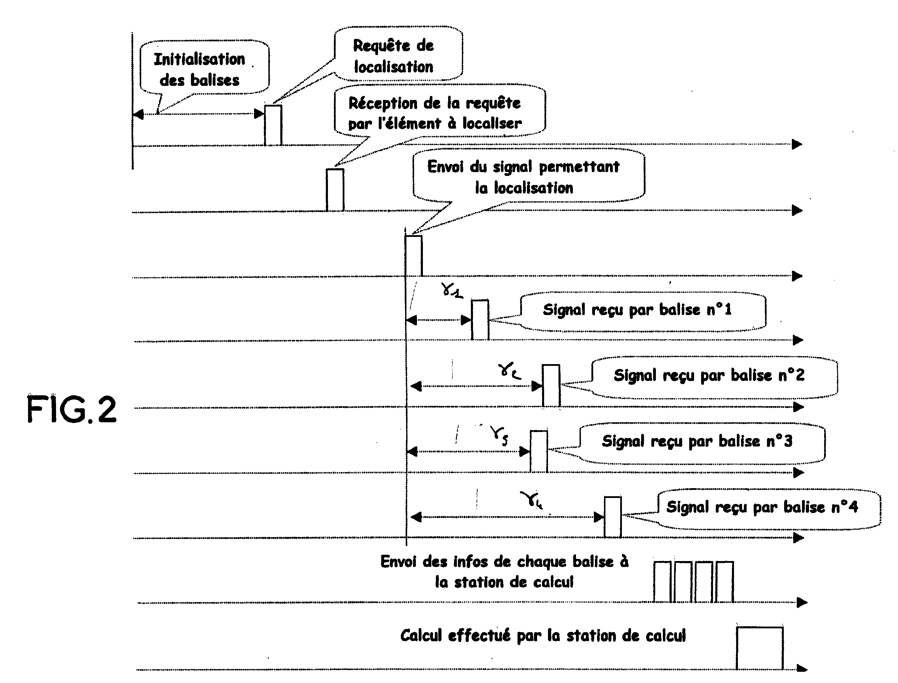

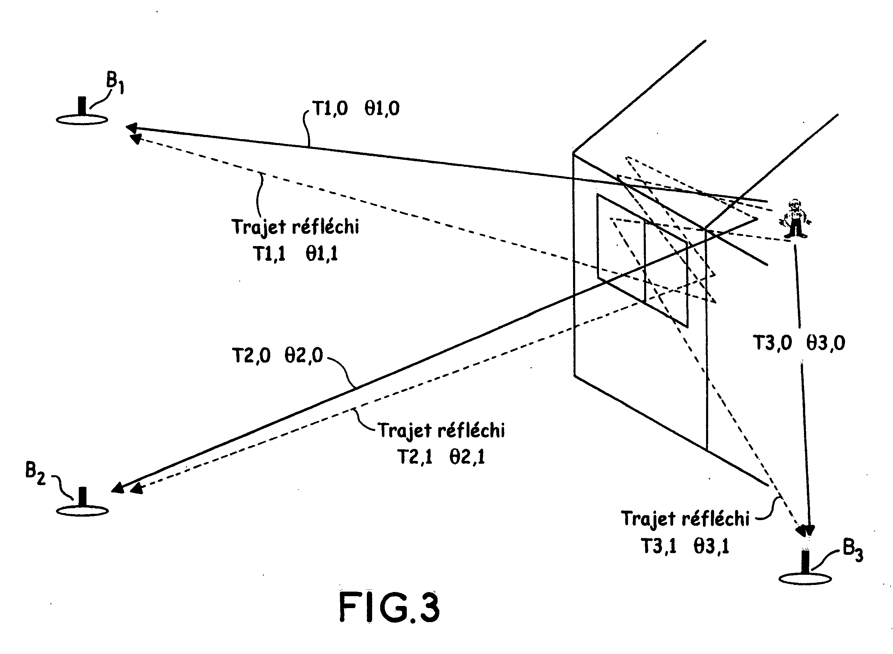

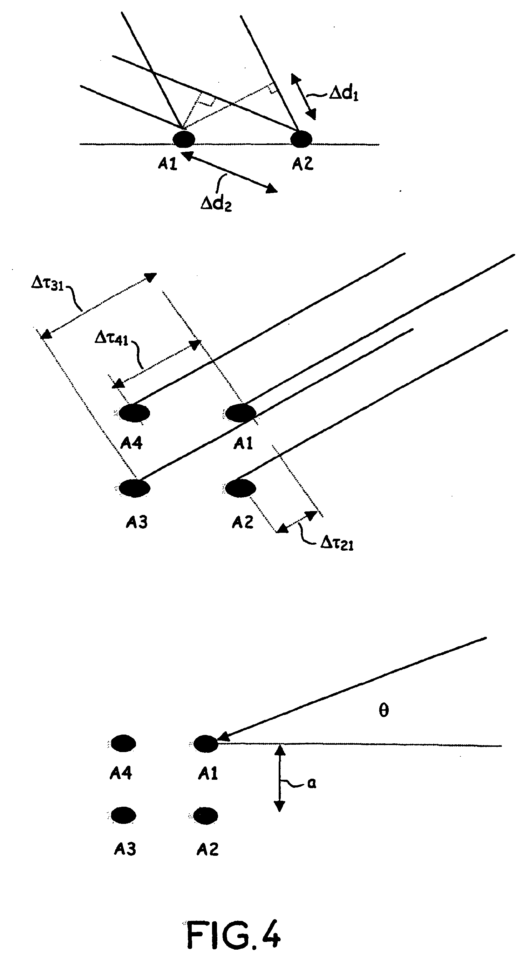

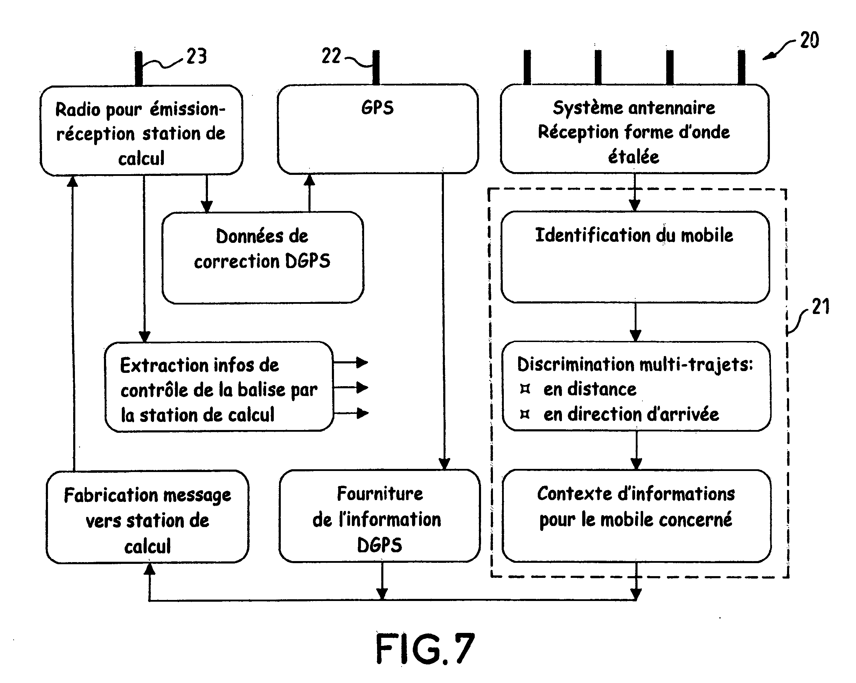

➢ La figure 1 un exemple d'architecture d'un dispositif selon l'invention,
➢ La figure 2 un exemple de chronogramme des signaux échangés entre un élément à localiser et les différentes balises,
➢ La figure 3 un exemple de propagation des différents multi-trajets,
➢ Les figures 4, 5 et 6 différents exemples de traitement des signaux,
➢ La figure 7 un détail d'une balise selon l'invention, et ses liaisons avec la station de calcul et la station de référence,

La figure 1 représente un exemple de système de localisation selon l'invention comportant au moins quatre balises $B_1$, $B_2$, $B_3$, $B_4$ (l'une d'elle n'étant pas représentée pour des raisons de simplification), en relation avec une station de référence Bref de coordonnées connues. Les quatre balises fonctionnent en mode GPS différentiel (ou DGPS) avec traitement des fréquences porteuses GPS $L_1$ et $L_2$ (algorithme LRK par exemple). Trois balises sont disposées dans un même plan et la quatrième en dehors de ce plan. Par exemple sur la figure 1, la balise $B_3$ est disposée à une certaine altitude $h_3$ définie par rapport au plan de référence déterminé par les trois autres balises. Une telle disposition permet d'atteindre une précision de localisation de l'ordre du centimètre pour chacune des balises, sous réserve que la balise soit en visibilité d'au moins quatre satellites.

De manière générale, les trois premières balises sont par exemple déployées au sol et la quatrième est disposée en dessus ou au dessous. Cette dernière est repérée par une différence de hauteur h positive ou négative, déterminée à partir du plan défini par les 3 autres, (par exemple 5 m de dénivelé), selon que la localisation vise les éléments dans les immeubles ou les sous-sols.

Le nombre de balises fonctionnant en mode DGPS est au moins supérieur ou égal à 4. La distance di séparant chacune de ces balises de la station de référence $B_{réf}$ peut être par exemple de plusieurs kms, voire supérieure à 10 kms. Les balises sont déployées soit avant une intervention, soit au fur et à mesure des besoins. Elles peuvent être installées de façon permanente. Choisir un nombre de balises supérieur à 4 permet notamment de créer une redondance et le rejet de mesures de certaines balises jugées aberrantes. Comme chacune d'elle est reconnaissable par son numéro d'identification et sa position (chaque balise est effectivement dotée d'un numéro d'identification, non ambigu, sur 4 octets par exemple, attribué à l'avance lors de la production et qui sert également pour sa maintenance), la station en charge du calcul final peut intégrer l'ensemble des informations reçues. Par exemple, lors de la progression de pompiers ou de forces de police en milieu urbain, le calcul de localisation, selon l'endroit où se situe l'individu ou l'objet à localiser, se fait à l'aide de certaines de ces balises (celles qui sont les mieux placées) puis sur d'autres selon la progression des opérations.

Le système comporte aussi une station de calcul $B_{cal}$ pouvant être l'une des balises du système. La station est pourvue d'un processeur adapté à exécuter les étapes décrites dans le procédé, à recevoir les échos multiples provenant d'un ou de plusieurs éléments à localiser, à traiter les signaux reçus et à discriminer les multi-trajets (trajets directs et/ou indirects) à utiliser. Le processeur est adapté pour interpréter et recouper les différents trajets directs et/ou les multi-trajets fournis par les différentes balises, à partir des échos reçus et comporte aussi une base de données regroupant les informations définissant une topographie ou une cartographie des lieux, afin de déterminer la position réelle de l'élément à localiser.

Les balises sont par exemple reliées entre elles à l'aide de moyens radio connus de l'Homme du métier ou bien par des moyens câblés. Elles sont synchronisées en temps, par exemple, au moyen d'un algorithme de recalage temporel fin avec effet préalable ou en stade final du calcul.

Les balises sont aussi mises en relation avec les éléments ou les individus à localiser en utilisant, par exemple, des moyens radio à étalement de spectre.

Dans le cas où la communication entre les balises est effectuée par voie radio, les moyens de communication entre les balises et les membres du réseau peuvent être les mêmes.

Les moyens de communication entre les balises et les membres (à localiser) du réseau peuvent être les mêmes que les moyens standards constituant le réseau de communication phonie, vidéo, images fixes entre les objets et les personnes. Ceci présente notamment comme avantage d'effectuer la localisation avec des moyens de communication habituels.

Selon une autre variante de réalisation, les moyens radio à étalement de spectre entre les membres du réseau à localiser et les balises sont de différentes natures : signaux du type séquence directe (code PN), UWB, FHSS (Frequency Hopping Spread Spectrum), Chirp, etc. La caractéristique commune à toutes les balises est d'être à spectre étalé avec un étalement minimum,10 MHz par exemple.

Les balises présentent notamment comme caractéristiques d'être de faible taille, facilement mises en place, réalisées à faible coût. Ainsi, elles peuvent être parachutées, lancées par un engin, hissées, ou encore positionnées par tout moyen approprié sur le toit d'un immeuble ou encore sur une hauteur. Les balises restent toujours accessibles au satellite. Elles peuvent être facilement lancées ou placées sur les immeubles et abandonnées à la fin de l'opération ou de la mission. Un exemple de détail de balise est donné à la figure 3, en liaison avec la station de référence et la station de calcul.

Selon une variante de réalisation, dans des déploiements du type Indoor, certains éléments ou membres du groupe, éventuellement mieux placés vis à vis des balises extérieures, sont capables de relayer l'émission du signal envoyé par l'élément à localiser ou à se faire localiser tout en indiquant le positionnement relatif de l'élément à localiser.

Une procédure simple à utiliser est la suivante : le système central de calcul qui reçoit l'ensemble des contextes d'information et qui effectue les traitements de cohérence ainsi que le calcul de la position, s'aperçoit que le positionnement de l'usager est impossible ou aberrant. Il envoie alors une interrogation vers le groupe (les éléments du réseau) pour connaître lequel est le plus proche de l'usager concerné. En effet, chaque membre du groupe connaît la proximité des autres, soit par la puissance du signal reçu soit par un positionnement relatif en distance. Chaque membre du groupe proche de l'usager à positionner envoie donc l'information de proximité vis à vis de celui-ci : distance relative, puissance de signal, qualité de transmission, ... et le plus 'proche' est localisé pour obtenir une information grossière de l'usager 'masqué'. Dans un grand nombre de cas, l'invention est utilisée pour localiser un groupe de personnes ou d'objets, membre d'un même réseau radio. Ce même réseau communique avec les balises et sert donc à la fois pour la localisation et pour communiquer en phonie ou en mode data.

Une ou plusieurs balises sont par exemple disposées à des endroits plus favorables pour la réception des signaux des membres du réseau à localiser, par exemple des fenêtres.

L'ensemble des balises externes se trouve par exemple sur des véhicules se déplaçant en fonction des besoins, le temps de synchronisation (initiale à partir de l'allumage) étant extrêmement réduit, de l'ordre de la minute.

La figure 2 représente un exemple de chronogramme des signaux échangés selon les étapes du procédé.

Il est connu que la localisation d'éléments en milieu fermé (bâtiments, immeubles, etc.) est affectée par des problèmes de propagation tels que l'absorption ainsi que l'existence de multi-trajets par réflexion. Pour pallier à ces phénomènes, il est possible de mettre en oeuvre deux mécanismes complémentaires.

Le premier consiste à mettre en place une technique de traitement des échos directs et réfléchis reposant sur la capacité de certaines formes d'onde à spectre étalé à faciliter la détermination de la direction d'arrivée des différents trajets. La balise qui reçoit les différents trajets envoie alors la liste et la direction de ces multi-trajets (trajets directs et trajets réfléchis) vers la station en charge du calcul de localisation, laquelle peut interpréter et recouper ces différents multi-trajets fournis par les différentes balises à l'aide d'une cartographie des lieux.

Le second repose sur la capacité de certains éléments ou membres du groupe, éventuellement mieux placés vis à vis des balises extérieures, à relayer l'émission du signal envoyé par l'élément à localiser ou à se faire localiser tout en indiquant le positionnement relatif de l'élément à localiser.

L'exemple qui suit donné à titre illustratif concerne le cas d'un mode de localisation avec requête.

**Etape 1**

Initialisation des balises DGPS (en visibilité des satellites) et obtention d'une précision centimétrique, par exemple, pour chacune des balises utilisées. Chaque balise Bi s'initialise indépendamment des autres et n'a besoin que de la station de référence pour pouvoir procéder à son recalage en mode DGPS.

**Etape 2**

Recalage de l'horloge absolue de chaque balise DGPS (recalage préalable) en tenant compte de l'écart de distance de chacune d'entre elles par rapport aux satellites et en utilisant un algorithme de recalage du type :"Algo de recalage des horloges" connu de l'Homme du métier. Cet algorithme de recalage permet notamment de tenir compte des effets de la différence de marche des signaux entre chaque satellite et les balises au sol. Chaque balise, sur les informations fournies par la station de référence, effectue ce recalage.

Dans le cas où le recalage n'est pas réalisé à ce stade, les étapes décrites ci-après restent applicables et la station en charge du calcul de localisation devra alors faire la correction dans le calcul de localisation (recalage final).

**Etape 3**

Dès qu'il y a un nombre minimum de balises synchronisées, par exemple 4 balises (trois dans un même plan et une quatrième en dehors de ce plan), l'une des balises est autorisée à envoyer une requête d'émission à l'élément à localiser. Par exemple, le système central effectue lui-même l'envoi de la requête ou bien il demande à l'une des balises de le faire s'il n'est pas en portée radio des éléments à localiser. Chaque balise, dès qu'elle est opérationnelle, commence ses mesures :

- Soit en mode sans requête, en détectant les signaux émis par les différents membres du groupe, en identifiant le numéro d'identification de chaque signal reçu, en envoyant le contexte d'informations détectées N° balise, N° Identification du membre détecté, liste des informations mesurées sur les différents multi-trajets du signal reçu. Ceci est répété pour chaque nouveau signal émis par l'un quelconque membre du groupe,
- Soit en mode avec requête, en indiquant à la station de calcul ou à une autorité quelconque qu'elle est opérationnelle. Cette autorité procède alors à la demande d'émission tour à tour, selon les besoins des membres du réseau. Cette autorité est en générale confondue avec le système central de calcul car ce dernier dispose des informations de position des éléments et sait donc déduire ceux qui nécessitent d'être localisés. Sans sortir du cadre de l'invention il est possible d'utiliser une autre « autorité » indépendante du système central de calcul.

**Etape 4**

L'élément à localiser reçoit la requête de localisation et envoie alors un signal $S_e$ étalé en fréquence. Dans le cas où il existe un second élément, défini par exemple comme étant le membre mieux placé qui est interrogé à la place de celui qui est masqué selon la procédure qui a été décrite précédemment, alors c'est ce second élément qui envoie le signal $S_e$ étalé en fréquence.

**Etape 5**

Le signal $S_e$ est reçu par les différentes balises, avec un temps de retard $y_i$ pour chacune des balises $B_1$, $B_2$, $B_3$ et $B_4$, qui est proportionnel à la distance di séparant l'élément à localiser des balises. Ce signal émis comporte par exemple une séquence de référence.

**Etape 6**

Au niveau de chacune des balises en portée de l'élément à localiser, le temps d'arrivée du signal est alors estimé, par exemple par l'instant de corrélation maximale du signal reçu avec la séquence de référence attendue.Toutes les balises s'attendent à cette signature et notent l'instant précis d'arrivée de cette signature. Cet instant est associé à un numéro d'identification du membre qui émet le signal. En fait comme il existe des multi-trajets, cette signature ou signal de référence va revenir plusieurs fois en très peu de temps, selon les différentes réflexions subies par le signal émis par le membre du groupe.

**Etape 7**

Les différentes informations de temps ti d'arrivée sont alors transmises à la station de calcul. Les temps d'arrivée sont utilisés basiquement pour définir une pseudo-distance dp entre l'élément à localiser et les différentes balises. L'algorithme de triangulation utilisé est par exemple basé sur l'intersection des sphères de rayon égal à la pseudo-distance dp estimée pour chacune des balises. De plus, les directions d'arrivée des multi-trajets associées aux pseudo-distances de ces multi-trajets vont servir à compléter l'approche basée uniquement sur les pseudo-distances du trajet principal.

Le processeur comporte par exemple en mémoire, une base de données représentative de la topologie des lieux, notamment des différents obstacles existants. Il est capable de combiner ces différentes données topologiques et les mesures d'angle, de distance, d'amplitude pour reconstruire les multi-trajets et aussi sélectionner les multi-trajets qu'il va utiliser.

Un exemple de mise en oeuvre d'un traitement est donné en relation avec les figures 3, 4 et 5 détaillées plus loin.

Différentes variantes de réalisation peuvent être mises en oeuvre pour l'étape 3.

Selon un mode de réalisation, plusieurs éléments à localiser sont assignés à répondre. Dans ce cas, une procédure d'attente aléatoire à l'émission permet alors de séparer à la réception les signaux émis par les différents éléments à localiser.

Selon une autre variante de réalisation, la localisation est effectuée sans émettre de requête de localisation. Ceci est possible par exemple pour un système dans lequel une même radio est utilisée pour les échanges d'informations (fonction communications) et pour la localisation. Ainsi, lorsqu'un élément émet un signal pour communiquer, les balises exploitent alors les émissions suivantes émises par le même élément. En effet, le rapport signal à bruit demandé pour obtenir une précision de l'ordre du mètre est important, de l'ordre de 27 dB et pour l'obtenir, il peut être utile d'intégrer le signal sur une certaine durée. Ainsi, dans ce mode, ce n'est que lorsqu'un élément tarde trop pour émettre un signal qu'une requête est alors nécessaire pour le forcer à émettre. Ce mode complémentaire est particulièrement utile pour éviter la saturation du réseau de communication et rester silencieux au maximum. Dans ce mode (sans requête) ce sont les signaux de communications qui sont utilisés directement dans les étapes décrites précédemment.

La précision du système est par exemple améliorée par la connaissance de certaines personnes du réseau indiquant une proximité. La précision peut aussi être renforcée par l'utilisation d'une radio ou de plusieurs radio du réseau placées dans un endroit parfaitement connu.

Lorsque la synchronisation entre les balises n'est plus disponible, il est possible d'utiliser un mode transpondeur sur les membres du réseau à localiser.

Suite à la réception des informations de localisation, chaque membre du réseau peut confirmer ou infirmer sa position et de ce fait augmenter la précision du système.

Un exemple de traitement de discrimination des multi-trajets est donné ci-après en relation avec les figures 3, 4, 5 et 6. Sur la figure 3 par exemple, les différents temps de propagation $T_{m,n}$ sont référencés de la façon suivante :

* m désigne la balise recevant les signaux,
* n désigne le numéro du multi-trajet (0 : trajet direct, 1 : premier multi-trajet, etc.).

La discrimination des multi-trajets s'effectue, par exemple, à l'aide d'une forme d'onde à étalement de spectre (caractéristique du signal émis par l'élément à localiser). Parmi les différentes méthodes d'étalement on peut citer : le saut de fréquence, le code pseudo-aléatoire du type PN ou autre, l'UWB, la rampe de fréquence de type LWMA (Linear Wideband Multiple Access).

Les paramètres de l'étalement et le rapport signal à bruit minimum sont choisis notamment en fonction de la précision, de la distance maximale, de l'environnement. Par exemple, un étalement minimum de 5 à 10 MHz permet notamment d'obtenir une précision de 1m. D'autre part, les méthodes de type étalement par saut de fréquence ou par code PN peuvent discriminer les échos en distance. La méthode UWB, du fait de son étalement en absence de porteuse est capable de discriminer les échos en distance avec une précision importante de l'ordre du cm ou de la dizaine de centimètres.

La méthode LWMA est capable de réaliser une double discrimination des échos en distance et en direction. Cette méthode est détaillée à titre d'exemple illustratif et nullement limitatif ci-après.

Dans le cas d'une rampe de fréquence, le signal $S_e$ émis par un élément à localiser et reçu par une antenne ($A_1$ figure 4) est le suivant :

$$S_1(t) = \sum_{i=0}^{N-1} a_i \, e^{-j\{2\pi f_i(t-\tau_i/2)+\varphi_i\}} \qquad (1)$$

Ce signal est composé d'un signal direct et de (N-1) multi-trajets, avec :

$a_0$ : l'amplitude du trajet direct
$a_i (i \neq 0)$ : amplitudes des multi-trajets
$f_0$ : fréquence de battement due au trajet direct
$f_i (i \neq 0)$ : fréquences de battement dues aux multi-trajets
$\tau_0$ : retard de transmission du trajet direct
$\tau_i (i \neq 0)$ : retard de transmission des multi-trajets
$\varphi_0$ : phase du signal du trajet direct

i(i≠0): phases des signaux des multi-trajets

La fréquence de battement est reliée au retard de transmission par la relation (2) : $f_i = S\tau_i$ dans laquelle s est la pente de la rampe

La phase du signal est reliée au retard de transmission par la relation (3) : $\varphi_i = 2\pi f_c\tau_i$ où $f_c$ représente la porteuse au départ de la rampe

Le retard de transmission est relié à la distance par la relation (4): $\tau_i = d_i/c$ dans laquelle c représente la vitesse de propagation des ondes électromagnétiques.

Si l'on considère une autre antenne omnidirectionnelle en réception (indicée 2), le signal reçu est alors

$$S_2(t) = \sum_{i=0}^{N-1} a_i\, e^{-j\{2\pi(f_i+\Delta f_i)(t-1/2(\tau_i+\Delta\tau_i))+\varphi_i+\Delta\varphi_i\}} \qquad (5)$$

Les différences $\Delta f_i$, $\Delta\varphi_i$, $\Delta\tau_i$ sont provoquées par l'allongement ou la réduction du chemin $\Delta d_i$ pour atteindre la seconde antenne ($A_2$ figure 4), selon l'orientation des ondes par rapport à l'axe de deux antennes tels que le schématise la figure 4.

$$\Delta f_i = s\,\Delta\tau_i$$

$$\Delta\varphi_i = 2\pi f_c\Delta\tau_i$$

$$\Delta\tau_i = \Delta d_i/c$$

Ainsi en utilisant un ensemble d'antennes, il est possible de discriminer les signaux des multi-trajets et d'indiquer pour chacun d'eux la direction d'arrivée correspondante.

Par exemple pour une discrimination des multi-trajets par la technique LWMA, les multi-trajets sont caractérisés par les variables suivantes :

$$f_i = s\,\tau_i$$

$$\varphi_i = 2\pi f_c\tau_i$$

$$\tau_i = d_i/c$$

et par les trois variables additionnelles précitées $\Delta f_i$, $\Delta\varphi_i$, $\Delta\tau_i$ dépendant des différences de temps de propagation entre les première et seconde antennes. Toutes les quantités $\Delta f_i$, $\Delta\varphi_i$, $\Delta\tau_i$ du ième multi-trajet dépendent de $\Delta di$, différence de distance pour ce multi-trajet entre la première et la seconde antenne.

Ceci signifie que le signal venant d'une direction donnée, présente des décalages en fréquence en plus des différences de phase obtenues sur les dispositifs à fréquence fixe. Ce paramètre additionnel peut être avantageusement utilisé pour discriminer les différents multi-trajets.

Il est aussi possible d'étendre la méthode de traitement à un système comportant 4 antennes $A_1$, $A_2$, $A_3$, $A_4$ (figure 4)..

Les signaux sont alors les suivants (6) :

$$S_1(t) = \sum_{i=0}^{N-1} a_i\, e^{-j\{2\pi f_i(t-\tau_i/2)+\varphi_i\}}$$

$$S_2(t) = \sum_{i=0}^{N-1} a_i\, e^{-j\left\{2\pi(f_i+\Delta f_i^{21})(t-(\tau_i+\Delta\tau_i^{21})/2)+\varphi_i+\Delta\varphi_i^{21}\right\}}$$

$$S_3(t) = \sum_{i=0}^{N-1} a_i\, e^{-j\left\{2\pi(f_i+\Delta f_i^{31})(t-(\tau_i+\Delta\tau_i^{31})/2)+\varphi_i+\Delta\varphi_i^{31}\right\}}$$

$$S_4(t) = \sum_{i=0}^{N-1} a_i\, e^{-j\left\{2\pi(f_i+\Delta f_i^{41})(t-(\tau_i+\Delta\tau_i^{41})/2)+\varphi_i+\Delta\varphi_i^{41}\right\}}$$

L'exposant mn signifiant : signal sur la m$^{\text{ème}}$ antenne en tenant compte du chemin à parcourir relativement à la n$^{\text{ème}}$ antenne

Exemple : $\Delta f_i^{31}$ représente l'écart de fréquence dû au i$^{\text{ème}}$ multi-trajet arrivant sur la 3$^{\text{ème}}$ antenne en tenant compte du chemin à parcourir relativement à la 1$^{\text{ère}}$ antenne (différence de chemin pour ce multi-trajet entre la 3$^{\text{ème}}$ antenne et la 1$^{\text{ère}}$).

Les signaux sont de la forme générale suivante (7):

$$S_k(t) = \sum_{i=0}^{N-1} a_i\, e^{-j\left\{2\pi(f_i+\Delta f_i)(t-(\tau_i+\Delta\tau_i)/2)+\varphi_i+\Delta\varphi_i\right\}}$$

Les différents termes sont les suivants :

$$T_1 = \left\{2\pi f_i (t - \tau_i/2) + \varphi_i\right\} \qquad (8)$$

$\rightarrow$ terme de base

$$T_2 = \left\{2\pi f_i\, \Delta\tau_i/2\right\} \quad (9)$$

$\rightarrow$ terme additif

$$T_3 = \left\{2\pi\, \Delta f_i (t - \tau_i/2 - \Delta\tau_i/2) + \Delta\varphi_i\right\} \quad (10)$$

$\rightarrow$ autre terme additif

**Exemple chiffré**

¤ a=30 cm d'où $\Delta\tau_i$ max = 1 ns où a est la distance séparant les antennes. Dans le cas où il y a 4 antennes, a correspond au côté du carré dessiné par les 4 antennes.

¤ $f_{i\,max}$ = 66 kHz pour d = 1000 m et une pente de (20 MHz, 1 ms) = 20 10$^9$ Hz/s, où d est la distance entre l'élément à localiser et la balise.

¤ $f_{i\,max}\,\Delta\tau_i max \sim 10^{-4}$ donc le terme $T_2$ est négligeable

¤ $\Delta f_{i\,max}$= 1 ns$^*$20 10$^9$ = 20 Hz

¤ max $\Delta f_{i\,max}$ = négligeable

¤ $\Delta\varphi_i max = 2\pi\ f_c\ \Delta\tau_{i\,max}$ : non négligeable due à la fréquence porteuse Finalement, l'expression du signal peut se simplifier et se ramener à la forme suivante :

$$S_k(t) = \sum_{i=0}^{N-1} a_i\ e^{-j\left\{2\pi\ f_i(t-\tau_i/2)+\varphi_i\right\}}e^{-j\left\{2\pi\ \Delta f_i\ t\ +\Delta\varphi_i\right\}}$$

(11)

D'où:

$$S_1(t) = \sum_{i=0}^{N-1} a_i\ e^{-j\left\{2\pi\ f_i(t-\tau_i/2)+\varphi_i\right\}}$$

$$S_2(t) = \sum_{i=0}^{N-1} a_i\ e^{-j\left\{2\pi\ f_i(t-\tau_i/2)+\varphi_i\right\}}e^{-j\left\{2\pi\ \Delta f_i^{21}\ t\ +\Delta\varphi_i^{21}\right\}}$$

$$S_3(t) = \sum_{i=0}^{N-1} a_i\ e^{-j\left\{2\pi\ f_i(t-\tau_i/2)+\varphi_i\right\}}e^{-j\left\{2\pi\ \Delta f_i^{31}\ t\ +\Delta\varphi_i^{31}\right\}}$$

$$S_4(t) = \sum_{i=0}^{N-1} a_i\ e^{-j\left\{2\pi\ f_i(t-\tau_i/2)+\varphi_i\right\}}e^{-j\left\{2\pi\ \Delta f_i^{41}\ t\ +\Delta\varphi_i^{41}\right\}}$$

Différents algorithmes de traitement de ces signaux peuvent être utilisés pour révéler les différentes quantités des multi-trajets.

L'un des algorithmes les plus simples, consiste à faire une analyse spectrale sur chacun des signaux des différentes antennes. Ainsi, pour chaque antenne et pour chaque membre du réseau qui émet, on détermine par la méthode de Prony les fréquences, les amplitudes, les phases initiales ainsi que les coefficients d'amortissement. Les fréquences et les phases peuvent être directement comparées entre les différentes antennes pour donner la direction de chaque multi-trajet (trajet direct inclus).

D'autres méthodes plus optimisées et plus adaptées au contexte particulier des signaux et connues de l'Homme du métier peuvent aussi être utilisées sans sortir du cadre de l'invention.

Lorsque les multi-trajets ont été identifiés, le procédé se déroule ensuite, par exemple, de la manière suivante.

Chaque balise transmet en plus de sa position précise GPS, pour le signal émis par un membre à positionner, une liste de multi-trajets avec le temps et la direction d'arrivée de chacun des multi-trajets. On a ainsi un ensemble de données s'exprimant de la manière suivante :

**Balise n° 1**

Position GPS balise 1

N° xyz du membre

$$a_{1,0} \; ; \; t_{1,0} \; ; \; \theta_{1,0}$$
$$a_{1,1} \; ; \; t_{1,1} \; ; \; \theta_{1,1}$$
$$\ldots$$
$$a_{1,j} \; ; \; t_{1,j} \; ; \; \theta_{1,j}$$

où {0,1, ... i} correspondent aux indices des différents multi-trajets

**Balise n°2**
Position GPS balise 2
N° xyz du membre

$$a_{2,0} \; ; \; t_{2,0} \; ; \; \theta_{2,0}$$
$$a_{2,1} \; ; \; t_{2,1} \; ; \; \theta_{2,1}$$
$$\ldots$$
$$a_{2,j} \; ; \; t_{2,j} \; ; \; \theta_{2,j}$$

**Balise n° N**
Position GPS balise i
N° xyz du membre

$$a_{N,0} \; ; \; t_{N,0} \; ; \; \theta_{N,0}$$
$$a_{N,1} \; ; \; t_{N,1} \; ; \; \theta_{N,1}$$
$$\ldots$$
$$a_{N,j} \; ; \; t_{N,j} \; ; \; \theta_{N,j}$$

La station de calcul :

➢ reçoit l'ensemble de ces informations (position GPS balise 1; écho 1 : amplitude, temps d'arrivée, angle d'arrivée; écho 2..etc.)
➢ recale les informations temporelles dans le cas de décalage constaté d'une ou de plusieurs balises,
➢ calcule les positions estimées du mobile ou de l'élément à localiser pour le contexte d'informations reçu de chaque balise, et
➢ effectue ensuite un traitement des données selon trois modes possibles

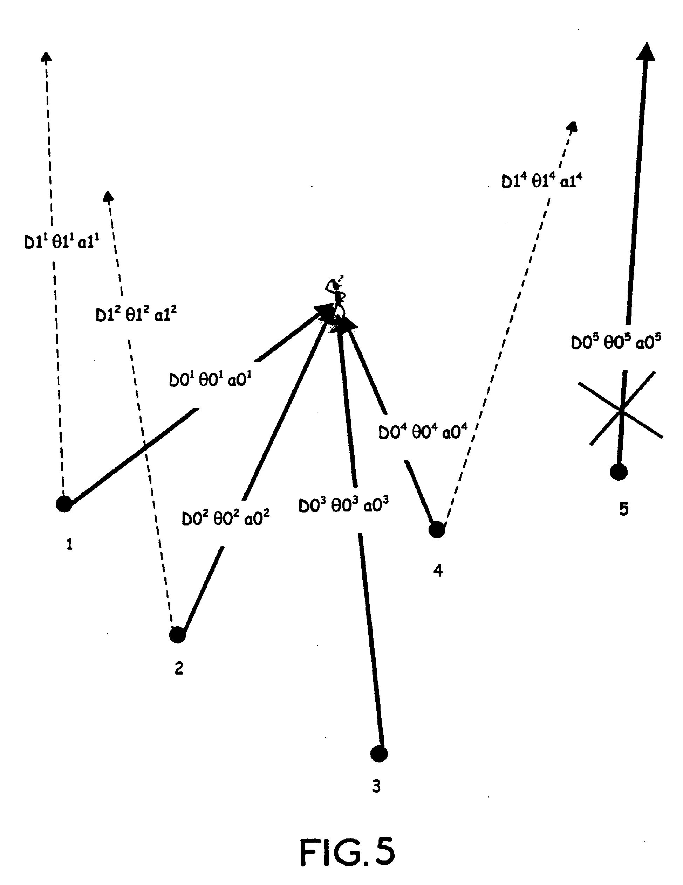

**Premier Mode** illustré à la figure 5 :
Le premier mode consiste à comparer les données recalées et à éliminer les informations de la ou des balises qui s'écartent de trop de la valeur indiquée par exemple par le plus grand nombre. Ceci est notamment possible si le nombre de balises est supérieur au nombre minimum 4 pour effectuer la mesure. $D_{k,i} \, \theta_{k,i} \, a_{k,i}$ correspond au trajet n°i reçu par la balise k.

Pour la balise 1 : $D_{1,0} \, \theta_{1,0} \, a_{1,0}..., D_{1,1} \, \theta_{1,1} \, a_{1,1} ..., D_{1,2} \, \theta_{1,2} \, a_{1,2} ..., ...$
Pour la balise 2 : $D_{2,0} \, \theta_{2,0} \, a_{2,0} ..., D_{2,1} \, \theta_{2,1} \, a_{2,1} ..., D_{2,2} \, \theta_{2,2} \, a_{2,2}..., ...$
Pour la balise N : $D_{N,0} \, \theta_{N,0} a_{NO}\cdots , D_{N,1} \theta_{N,1} a_{N,1} ..., D_{N,2}\theta_{N,2}a_{N,2}\cdots,$

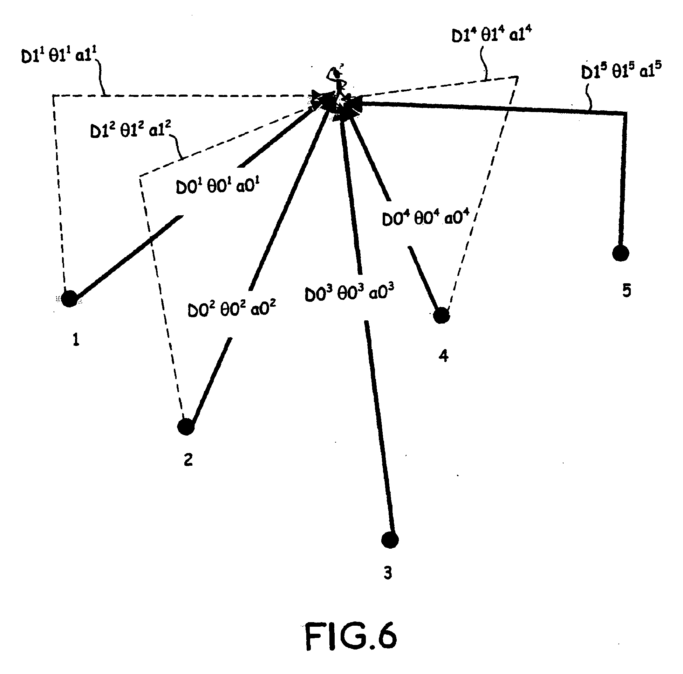

Dans cet exemple, les signaux de la balise n°5 sont retirés car trop entachés d'erreur. La position définitive de l'élément à localiser est calculé en tenant compte des trajets directs issus des 4 autres balises. Les trajets, autres que directs, ne sont pas exploités dans ce mode.
**Second mode** illustré à la figure 6
Le second mode consiste par exemple à prendre en compte les informations des trajets multiples en comparant les données recalées avec une base de données cartographiques. Les trajets multiples sont alors interprétés en plus des trajets directs. Par ailleurs, dans certaines situations de propagation, les trajets directs ne sont pas reçus et le premier écho est classé improprement comme trajet direct. Cette méthode permet de tester la possibilité qu'un écho pris comme direct puisse être en fait un multi-trajet.

Ainsi la figure 6 schématise la reconstruction des multi-trajets en tenant compte des données transmises à la station de calcul ainsi que d'une base de données représentatives des différents obstacles existant, ou cartographie.

**Troisième mode**

Le troisième mode consiste à recevoir une information de position très précise par voie radio (par exemple 'mobile X exactement au pied de la fontaine') et à calibrer le système en fonction des informations reçues.

La figure 7 schématise un détail possible d'une balise et ses liaisons avec la station de calcul et la station de référence.

Une balise comporte par exemple une partie I destinée notamment à recevoir le signal à spectre étalé émis de l'élément à localiser; ceci grâce à un système antennaire 20 comportant un jeu de 4 antennes par exemple adaptées à la réception de forme d'onde étalée. Cette partie comporte un processeur 21 capable d'identifier l'élément mobile à identifier par exemple à l'aide du message inclus dans l'en-tête. Une fois le mobile identifié, le processeur effectue différents traitements, tels que la discrimination des multi-trajets en distance, en direction d'arrivée et il détermine aussi l'amplitude du signal. A l'issu de ce traitement la balise possède un contexte d'informations pour le mobile concerné, s'exprimant par exemple sous la forme d'un ensemble ai,j; ti,j; θi,j avec i l'indice de la balise concernée et j l'indice d'un multi-trajet.

La balise comporte aussi une partie II comprenant par exemple une antenne 22 choisie pour recevoir les signaux GPS.

Elle comporte aussi une autre antenne émettrice-réceptrice 23 qui communique avec la station de calcul et aussi la station de référence $B_{réf}$ pour recevoir des données de correction DGPS.

Le contexte d'informations pour l'élément à localiser ainsi que les données DGPS (position précise de la balise) sont transmis sous la forme d'un message vers la station de calcul au moyen de l'antenne 23. Cette dernière reçoit les données de correction DGPS qu'elle communique à la partie de positionnement GPS.

Ce schéma est éventuellement complété par un étage d'émission radio vers le mobile, si la mesure de distance se fait non pas uniquement par écoute passive, non pas seulement par demande de la station de calcul mais aussi par toute balise (la mieux placée de préférence) sur ordre préliminaire de la station de calcul par exemple.

La station de contrôle peut aussi dans certains cas contrôler les mouvements des différentes balises. Cette variante de réalisation permet notamment une localisation en 3 dimensions dynamique.

Le système peut aussi fonctionner dans un mode simplifié où la cartographie n'est plus utilisée et les multi-trajets ne sont pris en considération.

## Revendications

1. Système de localisation précise en 3D d'un élément (objet ou individu) comportant au moins les éléments suivants : un ensemble de balises $B_1$, $B_2$, $B_3$, $B_4$ en relation avec une station de référence $B_{réf}$ de coordonnées connues, lesdites balises $B_1$, $B_2$, $B_3$, $B_4$ travaillant sur la base de la localisation satellite différentielle (DGPS), les balises étant reliées entre elles et synchronisées en temps, lesdites balises recevant les signaux dudit élément à localiser, des moyens radio à étalement de spectre entre les membres du réseau à localiser et lesdites balises, une station de calcul $B_{cal}$ **caractérisé en ce que**
   la station de calcul $B_{cal}$ est pourvue d'un processeur adapté à exécuter les étapes suivantes :

   ➢ la transmission par une balise de sa position DGPS, et une liste de multi-trajets avec le temps et la direction d'arrivée de chacun des trajets directs et/ou des multi-trajets émis par l'élément à localiser,
   ➢ le recalage temporel si nécessaire dans le cas de décalage constaté d'une ou de plusieurs balises,
   ➢ le calcul des positions estimées de l'élément pour le contexte d'informations reçu de chaque balise,
   ➢ un traitement des données utilisant une cartographie ou une topologie de l'environnement dans lequel se trouve l'élément à localiser pour reconstruire les différents trajets directs et/ou les multi-trajets, sélectionner les multi-trajets pour déterminer de manière précise en 3D l'élément à localiser.

2. Système selon la revendication 1 **caractérisé en ce que** le nombre des balises est au moins égal à 4, trois d'entre elles étant disposées dans un même plan et la quatrième à une altitude donnée de ce plan.

3. Système selon l'une des revendications 1 et 2 **caractérisé en ce** les moyens de communication entre les balises et les membres à localiser du réseau sont identiques ou sensiblement identiques aux moyens standards constituant le réseau de communication, et supportant la phonie, la vidéo, les images fixes.

4. Système selon la revendication 1 **caractérisé en ce que** les moyens radio à étalement de spectre entre les éléments à localiser et les balises sont de nature différentes, telles que des formes d'onde à séquence directe (code PN, ...), UWB, saut de fréquence FHSS, rampe de fréquence du type chirp, etc.

5. Procédé de localisation en 3 dimensions d'un élément dans un système comportant au moins 4 balises $B_1$, $B_2$, $B_3$, $B_4$ travaillant sur la base de la localisation satellite différentielle (DGPS), les balises étant synchronisées en temps, **caractérisé en ce qu'**il comporte au moins les étapes suivantes :

> ➢ la transmission par une balise de sa position DGPS, et une liste de multi-trajets avec le temps et la direction d'arrivée de chacun des trajets directs et/ou des multi-trajets émis par l'élément à localiser,
> ➢ le recalage temporel si nécessaire dans le cas de décalage constaté d'une ou de plusieurs balises,
> ➢ le calcul des positions estimées de l'élément pour le contexte d'informations reçu de chaque balise,
> ➢ un traitement des données utilisant une cartographie ou une topologie de l'environnement dans lequel se trouve l'élément à localiser pour reconstruire les différents trajets directs et/ou les multi-trajets, sélectionner les multi-trajets pour déterminer de manière précise en 3D l'élément à localiser.

6. Procédé selon la revendication 5 **caractérisé en ce que** le traitement des données comporte une étape de comparaison des données recalées et une étape d'élimination des informations de la ou des balises s'écartant de trop de la valeur indiquée par le plus grand nombre des balises.

7. Procédé selon la revendication 5 **caractérisé en ce que** le traitement des données comporte la prise en compte des informations des trajets multiples en comparant les données recalées avec une base de données cartographiques.

8. Procédé selon la revendication 5 **caractérisé en ce qu'**une des balises émet une requête afin de localiser l'élément.

9. Procédé selon la revendication 5 **caractérisé en ce que** la localisation est réalisée en scrutant les signaux de communication émis au cours du temps par le ou les éléments à localiser.

10. Procédé selon l'une des revendications 5 à 9 **caractérisé en ce que** les signaux échangés entre les balises et les membres à localiser du réseau sont identiques ou sensiblement identiques aux moyens standards constituant le réseau de communication, et supportant la phonie, la vidéo, les images fixes.

11. Procédé selon l'une des revendications 5 à 9 **caractérisé en ce qu'**il utilise des moyens radio à étalement de spectre entre les éléments à localiser et les balises qui sont de natures différentes, telles que des formes d'onde à séquence directe (code PN, ...), UWB, saut de fréquence FHSS, rampe de fréquence du type chirp, etc.

**Claims**

1. An accurate 3D position-finding system for locating an element (object or individual) comprising at least the following elements: a set of beacons $B_1$, $B_2$, $B_3$, $B_4$ associated with a reference station $B_{ref}$ with known coordinates, said beacons $B_1$, $B_2$, $B_3$, $B_4$ operating on the basis of differential global positioning satellites (DGPS), the beacons being connected together and temporally synchronised, said beacons receiving signals from said element to be located, spread-spectrum radio means between the members of the network to be located and said beacons, a computation station $B_{cal}$, **characterised in that**
the computation station $B_{cal}$ is provided with a processor capable of completing the following steps:

> transmission by a beacon of its DGPS position, and a list of multiple paths with the time and the direction of arrival of each of the direct and/or multiple paths emitted by the element to be located,
> temporal adjustment, if necessary, in the event of a detected shift in one or more beacons,
> computation of the estimated positions of the element in the context of information received from each beacon,
> data processing using the mapping or the topology of the environment in which the element to be located is found in order to reconstruct the different direct and/or multiple paths, selecting the multiple paths in order to accurately determine in 3D the element to be located.

2. The system according to claim 1, **characterised in that** the number of beacons is at least equal to 4, three of which are arranged in the same plane and the fourth being arranged at a given altitude relative to this plane.

3. The system according to any one of claims 1 to 2, **characterised in that** the means of communication between the beacons and the members of the network to be located are identical or essentially identical using standard means which constitute the communication network, and which support telephony, video and fixed images.

4. The system according to claim 1, **characterised in that** the spread-spectrum radio means between the elements to be located and the beacons are of a different type, such as direct sequence waveforms (PN code,...), UWB, FHSS frequency hopping, chirp type frequency ramp, etc.

5. A process for 3-dimensional position-finding of an element in a system comprising at least 4 beacons $B_1$, $B_2$, $B_3$, $B_4$ operating on the basis of differential global positioning satellites (DGPS), the beacons being temporally synchronised, **characterised in that** it comprises at least the following steps:

   transmission by a beacon of its DGPS position, and a list of multiple paths with the time and the direction of arrival of each of the direct and/or multiple paths emitted by the element to be located,
   temporal adjustment, if necessary, in the event of a detected shift in one or more beacons,
   computation of the estimated positions of the element in the context of information received from each beacon,
   data processing using the mapping or the topology of the environment in which the element to be located is found in order to reconstruct the different direct and/or multiple paths, selecting the multiple paths in order to accurately determine in 3D the element to be located.

6. The process according to claim 5, **characterised in that** the data processing includes a step for comparing adjusted data and a step for eliminating data from the one or more beacons which excessively deviates from the value indicated by most of the beacons.

7. The process according to claim 5, **characterised in that** the data processing includes consideration of the information from the multiple paths by comparing the adjusted data with a cartographic database.

8. The process according to claim 5, **characterised in that** one of the beacons emits a request in order to locate the element.

9. The process according to claim 5, **characterised in that** position-finding is realised by scanning the communication signals emitted over time by the one or more elements to be located.

10. The process according to any one of claims 5 to 9, **characterised in that** the signals exchanged between the beacons and the members of the network to be located are identical or essentially identical using standard means which constitute the communication network, and which support telephony, video and fixed images.

11. The process according to any one of claims 5 to 9, **characterised in that** the spread-spectrum radio means between the elements to be located and the beacons are of a different type, such as direct sequence waveforms (PN code,...), UWB, FHSS frequency hopping, chirp type frequency ramp, etc.

**Patentansprüche**

1. System zur genauen 3D-Ortung eines Elements (Gegenstand oder Person), das mindestens die folgenden Elemente umfasst: eine Gruppe von Markierungen $B_1$, $B_2$, $B_3$, $B_4$ in Beziehung zu einer Referenzstation $B_{ref}$ mit bekannten Koordinaten, wobei die Markierungen $B_1$, $B_2$, $B_3$, $B_4$ auf der Basis der Differential-Satellitenortung (DGPS) arbeiten, wobei die Markierungen miteinander verbunden und zeitlich synchronisiert sind, wobei die Markierungen die Signale des zu ortenden Elements empfangen, Spreizspektrum-Funkmittel zwischen den zu ortenden Mitgliedern des Netzes und den Markierungen, eine Rechenstation $B_{cal}$, **dadurch gekennzeichnet, dass** die Rechenstation $B_{cal}$ mit einem Prozessor ausgestattet ist, der geeignet ist, die folgenden Schritte durchzuführen:

   - die Übermittlung ihrer DGPS-Position durch eine Markierung und einer Liste von Mehrfachwegen mit der Zeit und der Richtung des Eintreffens aller direkten Wege und/oder der Mehrfachwege, die vom zu ortenden Element gesendet werden,
   - die zeitliche Korrektur, sofern notwendig, bei einem festgestellten Versatz einer oder mehrerer Markierungen,
   - die Berechnung der geschätzten Positionen des Elements für den von jeder Markierung empfangenen Informationskontext,

- eine Datenverarbeitung, die eine Kartographie oder eine Topologie des Umfelds benutzt, in dem sich das zu ortende Element befindet, um die verschiedenen direkten Wege und/oder die Mehrfachwege zu rekonstruieren, die Mehrfachwege zu selektieren, um das zu ortende Element genau in 3D zu bestimmen.

**2.** System nach Anspruch 1, **dadurch gekennzeichnet, dass** die Anzahl der Markierungen mindestens gleich 4 ist, wobei 3 von ihnen in derselben Ebene angeordnet sind und die vierte in einer bestimmten Höhe von dieser Ebene angeordnet ist.

**3.** System nach einem der Ansprüche 1 und 2, **dadurch gekennzeichnet, dass** die Kommunikationsmittel zwischen den Markierungen und den zu ortenden Mitgliedern des Netzes identisch oder etwa identisch mit den Standardmitteln sind, die das Kommunikationsnetz bilden, und die Telephonie, das Video, die starren Bilder unterstützen.

**4.** System nach Anspruch 1, **dadurch gekennzeichnet, dass** die Spreizspektrum-Funkmittel zwischen den zu ortenden Elementen und den Markierungen unterschiedlicher Art sind, wie zum Beispiel Wellenformen mit direkter Sequenz (PN-Code ...), UWB, FHSS-Frequenzsprung, Frequenzrampe vom Typ Chirp usw.

**5.** Verfahren zur dreidimensionalen Ortung eines Elements in einem System, das mindestens vier Markierungen $B_1$, $B_2$, $B_3$, $B_4$ umfasst, die auf der Basis der Differential-Satellitenortung (DGPS) arbeiten, wobei die Markierungen zeitlich synchronisiert sind, **dadurch gekennzeichnet, dass** es mindestens die Schritte umfasst:

- die Übermittlung ihrer DGPS-Position durch eine Markierung und einer Liste von Mehrfachwegen mit der Zeit und der Richtung des Eintreffens aller direkten Wege und/oder der Mehrfachwege, die vom zu ortenden Element gesendet werden,
- die zeitliche Korrektur, sofern notwendig, bei einem festgestellten Versatz einer oder mehrerer Markierungen,
- die Berechnung der geschätzten Positionen des Elements für den von jeder Markierung empfangenen Informationskontext,
- eine Datenverarbeitung, die eine Kartographie oder eine Topologie des Umfelds benutzt, in dem sich das zu ortende Element befindet, um die verschiedenen direkten Wege und/oder die Mehrfachwege zu rekonstruieren, die Mehrfachwege zu selektieren, um das zu ortende Element genau in 3D zu bestimmen.

**6.** Verfahren nach Anspruch 5, **dadurch gekennzeichnet, dass** die Datenverarbeitung einen Schritt des Vergleichs der korrigierten Daten und einen Schritt des Löschens der Informationen der Markierung oder der Markierungen umfasst, die zu sehr von dem Wert abweichen, der von den meisten Markierungen angegeben wird.

**7.** Verfahren nach Anspruch 5, **dadurch gekennzeichnet, dass** die Datenverarbeitung die Berücksichtigung der Informationen der Mehrfachwege durch Vergleich der korrigierten Daten mit einer kartographischen Datenbank umfasst.

**8.** Verfahren nach Anspruch 5, **dadurch gekennzeichnet, dass** eine der Markierungen eine Anfrage sendet, um das Element zu orten.

**9.** Verfahren nach Anspruch 5, **dadurch gekennzeichnet, dass** die Ortung durch Durchsuchen der Kommunikationssignale durchgeführt wird, die im Laufe der Zeit von dem oder den zu ortenden Elementen gesendet wurden.

**10.** Verfahren nach einem der Ansprüche 5 bis 9, **dadurch gekennzeichnet, dass** die zwischen den Markierungen und den zu ortenden Mitgliedern des Netzes ausgetauschten Signale identisch oder etwa identisch mit den Standardmitteln sind, die das Kommunikationsnetz bilden und die Telephonie, das Video, die starren Bilder unterstützen.

**11.** Verfahren nach einem der Ansprüche 5 bis 9, **dadurch gekennzeichnet, dass** es Spreizspektrum-Funkmittel zwischen den zu ortenden Elementen und den Markierungen benutzt, die unterschiedlicher Art sind, wie zum Beispiel Wellenformen mit direkter Sequenz (PN-Code ...), UWB, FHSS-Frequenzsprung, Frequenzrampe vom Typ Chirp usw.

EP 1 345 042 B1

B_ref

requête de localisation

B_1

B_2

B_3

FIG.1

FIG.2

Initialisation des balises

Requête de localisation

Réception de la requête par l'élément à localiser

Envoi du signal permettant la localisation

$\Upsilon_1$

Signal reçu par balise n°1

$\Upsilon_2$

Signal reçu par balise n°2

$\Upsilon_3$

Signal reçu par balise n°3

$\Upsilon_4$

Signal reçu par balise n°4

Envoi des infos de chaque balise à la station de calcul

Calcul effectué par la station de calcul

FIG.3

$\Delta d_1$

$\Delta d_2$

A1    A2

$\Delta\tau_{31}$

$\Delta\tau_{41}$

A4    A1

A3    A2

$\Delta\tau_{21}$

$\theta$

$a$

A4    A1

A3    A2

# FIG.4

$D1^1 \; \theta1^1 \; a1^1$

$D1^2 \; \theta1^2 \; a1^2$

$D1^4 \; \theta1^4 \; a1^4$

$D0^1 \; \theta0^1 \; a0^1$

$D0^5 \; \theta0^5 \; a0^5$

$D0^4 \; \theta0^4 \; a0^4$

$D0^2 \; \theta0^2 \; a0^2$

$D0^3 \; \theta0^3 \; a0^3$

1

2

3

4

5

FIG.5

$D1^1\ \theta1^1\ a1^1$

$D1^4\ \theta1^4\ a1^4$

$D1^5\ \theta1^5\ a1^5$

$D1^2\ \theta1^2\ a1^2$

$D0^1\ \theta0^1\ a0^1$

$D0^4\ \theta0^4\ a0^4$

$D0^2\ \theta0^2\ a0^2$

$D0^3\ \theta0^3\ a0^3$

1

2

3

4

5

FIG.6

EP 1 345 042 B1

Radio pour émission-réception station de calcul ~23

GPS 22~

Système antennaire Réception forme d'onde étalée ~20

Données de correction DGPS

Identification du mobile ~21

Extraction infos de contrôle de la balise par la station de calcul

Discrimination multi-trajets:
- en distance
- en direction d'arrivée

Fabrication message vers station de calcul

Fourniture de l'information DGPS

Contexte d'informations pour le mobile concerné

FIG.7

**EP 1 345 042 B1**

## RÉFÉRENCES CITÉES DANS LA DESCRIPTION

**Documents brevets cités dans la description**

- EP 0444738 A